# EUROPEAN PATENT SPECIFICATION

(11) **EP 0 349 836 B1**
(45) Date of publication and mention of the grant of the patent: **03.08.1994**
(21) Application number: 89111329.2
(22) Date of filing: 22.06.1989
(51) Int. Cl.: H02H 11/00

(54) **A guarded electronic circuit from reversal of its supply battery polarity**
Gegen die Polaritätsumkehr seiner Versorgungsbatterie geschützte elektronische Schaltung
Circuit électronique protégé contre l'inversion de la polarité de sa batterie d'alimentation

(30) Priority: 05.07.1988 IT 2123588
(43) Date of publication of application: 10.01.1990
(73) Proprietor: SGS-THOMSON MICROELECTRONICS s.r.l., 20041 Agrate Brianza (Milano) (IT)
(72) Inventor: Cini, Carlo, I-20010 Cornaredo Milano (IT); Murari, Bruno, I-20052 Monza Milano (IT)
(74) Representative: Perani, Aurelio

(56) References cited:
- DE-A- 3 535 788
- US-A- 3 829 709
- US-A- 3 940 785
- US-A- 4 423 456
- US-A- 4 473 757
- US-A- 4 658 203

## Description

This invention relates to an electronic circuit which is protected against reversal of the polarity of a supply battery, of a type comprising a power transistor to be connected between one pole of the battery and ground, to drive an electric load to ground.

It is a well-recognized fact that car manufacturing procedures call for the addition of an electric system powering battery to each car during the final stages of the electric system installation process and assembly of the electric loads connected therein.

The various electric loads, such as lights, actuators, and the like, are usually driven between a positive supply pole and ground via electronic control circuits.

Since it is not unlikely for the cables which interconnect the supply to such circuits to be occasionally misled, there exists a demand for having the supply battery installed, even where polarity has been reversed, without endangering said integrated circuits.

This need also arises from the likelihood that just the battery connections be reversed by mistake, and becomes specially acute where an integrated circuit includes power actuators including, inter alia, inherent transistors, for which no limiting resistive components can be provided in the supply line since these would lower the supply voltage in consequence of the voltage drop thereacross.

To meet the above demand, it has been proposed that a unidirectional component, specifically a diode, be connected between the positive supply pole and the electronic control circuit to protect such an integrated circuit in the event that the battery polarity is reversed.

While being advantageous cost-wise, this prior approach has a drawback in that the voltage drop Vd across the diode lowers the voltage available to the electric load to be driven, and that the overall efficiency of the system deteriorates due to the power requirements being increased by an amount equal to the product of the voltage Vd across the diode multiplied by the current IL flowing through the load.

In US-A-4,423,456 it has been proposed to connect a protection MOS type transistor in series between the positive pole of a power supply and a device to be protected, the protection transistor being driven in break state when the polarity of the DC power supply is reversed and being conductive when the voltage is properly applied.

The transistor conductance is due not only to the forward biasing of the inherent diode but also to the conductive state taken by the transistor channel.

DE-A-3,535,788 provides, in more detailed teaching the same suggestion and considers the use of either a P-channel MOSFET for connection between the positive pole and the load, or of a N-channel MOSFET for connection between the negative pole of the voltage source and the load.

In this way the voltage drop across the protection transistor can be lowered but the problems of possible integration of the protection device in a control circuit controlling the energization of the load and still having the load grounded are not considered, nor is a solution to such problems suggested.

US-A-4,658,203 discloses a control circuit for an inductive load, where a power MOSFET is used, coupled between ground and an inductive load terminal, the other load terminal being connected to a positive voltage source.

A voltage clamp circuit is provided to render the power MOSFET conductive if a positive inductive voltage appears at the junction between the load and the switch. However no protection, in the sense of preventing a reverse current flow in the load, in case of voltage reversal is provided.

This document may be considered exemplary of the several problems involved in the protection against voltage reversal, of a load controlled by a circuit including a power MOSFET.

In US-A-4,658,203 a voltage reversal of the power supply would cause current conduction through the inherent diode of the power MOSFET and the load, with possible damage of the same and in any event uncontrolled energization of the load.

Further, under properly applied powering, when the power MOSFET is switched off the load is disconnected from ground and remains connected to the positive pole of the voltage source, a situation which is to be avoided in automotive electrical equipment for safety reasons.

A combination of the teaching of the above documents would be possible but the result would not lead to the reconciliation of the several requirements of safety, efficiency and integrability of the protection device and the control circuit in a single component.

The technical problem that underlies this invention is to provide an electronic integrated circuit having such structural and performance characteristics as to overcome the cited drawbacks of the prior art.

This problem is solved by a circuit as indicated in the appended claim 1.

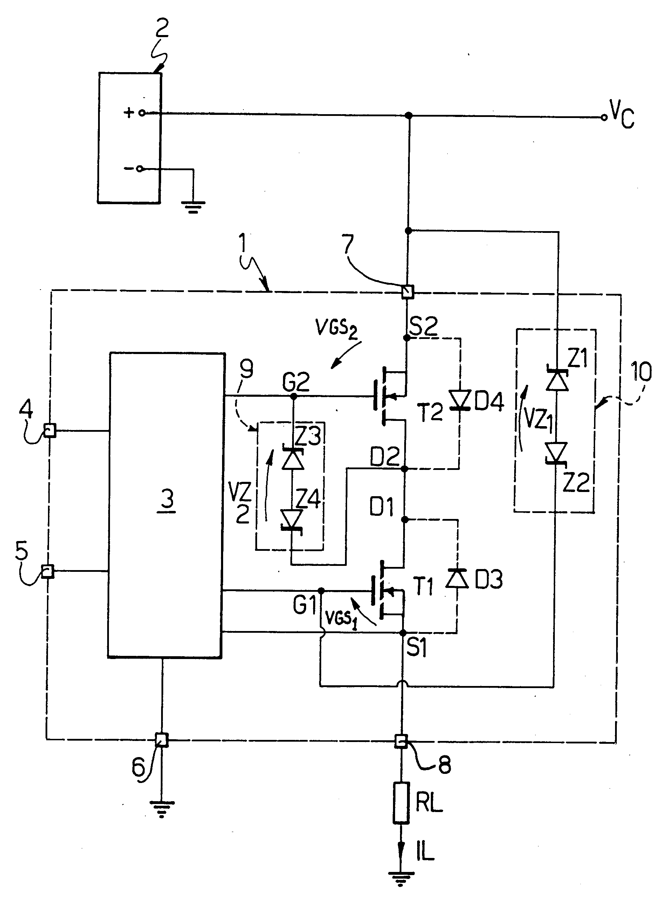

The features and advantages of a circuit according to the invention will become apparent from the following detailed description of an embodiment thereof, given by way of illustration and not of limitation with reference to the accompanying drawing.

Shown in the drawing is a diagram of the inventive circuit.

With reference to the drawing view, generally and schematically indicated at 1 is a circuit, embodying this invention, which is protected against reversal of the polarity of a supply battery 2.

The circuit 1 is of the integrated kind and comprises a circuit portion 3, known per se, which is connected to an input pin 4 and to a pair of output pins 5 and 6, wherein the pin 6 is grounded.

The circuit 1 also comprises a further input pin 7, connected to a positive supply pole Vc of the battery 2, and a further output pin 8 connected to one end of a resistor RL having the other end connected to ground.

That resistor RL is representative of an electric load driven to ground by means of the circuit 1.

The circuit 1 incorporates a first power transistor T1 of the enhancement, N-channel MOS type, which has its gate G1 and source S1 connected to the circuit portion 3. The source S1 is also connected to drive the load RL via the output pin 8.

The transistor T1 includes an inherent diode D3, between the source S1 and the drain D1, which is biased forwardly toward the source S1.

According to the invention, a second transistor T2, also of the N-channel MOS power type, is incorporated to the circuit 1, with its source S2 and drain D2 electrodes respectively connected to the positive pole Vc, through the input pin 7, and to the drain D1 of the first transistor T1. The gate G2 of the second transistor T2 is in turn connected to the circuit portion 3.

The transistor T2 also has an inherent diode D4 between the source S2 and the drain D2, and is biased forwardly toward the source S2.

In addition, the circuit 1 is provided with devices 9 and 10 for protection against possible positive or negative overvoltages from the battery 2. The device 10 comprises a pair of Zener diodes Z1 and Z2, connected serially to each other and in push-pull configuration between the positive pole Vc and the gate G1 of the first transistor T1.

The device 9 comprises, in turn, a pair of Zener diodes Z3 and Z4 interconnected in push-pull configuration, between the gate G2 and the drain D2 of the second transistor T2.

The second transistor is conducting at all times when the supply voltage Vc has the correct polarity, and will protect the integrated circuit 1 in all those cases where the polarity of the battery 2 is reversed.

In operation of the circuit 1, a current IL flows through the load RL which is supplied from the first transistor T1 via the second protection transistor T2.

On the polarity of the battery 2 being reversed, the second transistor will change to a break state and protect both the circuit 1 and the load RL.

Advantageously, the voltage drop V across the second transistor may be made as small as desired, since it results from the product of the inherent resistance of the transistor T2 multiplied by the load current IL flowing therethrough. Since the value of this resistance is tied inversely to the silicon area occupied by that second transistor in the integrated circuit 1, this resistive value may be made quite small by increasing the surface area occupied by the transistor and consequently reducing the voltage drop thereacross and the amount of electric power used up.

Thus, the circuit of this invention has a major advantage in that it can protect itself against any reversals in the polarity of the supply battery to which it is connected, while also protecting the electric load driven thereby.

This circuit also has an outstandingly simple structure, may be readily implemented as an integrated circuit, and is characteristically endowed with very small power dissipation.

## Claims

1. An integrated electronic circuit (1) which is protected against reversal of the polarity of a supply battery (2), of a type comprising a first MOS-type power transistor (T1) with inherent diode (D3) to be connected in series with a load (RL) between a pole (Vc) of said battery (2) and ground, to drive said electrical load, characterized in that said circuit (1) comprises a second protection N-channel MOS-type transistor (T2) with inherent diode (D4), said second transistor (T2) having its source (S2) connected to an input pin (7) of the circuit (1) for connection to said pole (Vc) of the battery (2) and its drain (D2) series connected to said first transistor (T1), said transistors (T1,T2) having their inherent diodes (D3,D4) biased in opposed directions and said second transistor (T2) being controlled by the circuit (1) to be in a break state upon polarity reversal of said battery (2).

2. A circuit according to claim 1 where said first and second transistor (T1,T2) are both of the N-channel MOS type, with their respective drain electrodes (D1,D2) connected to each other.

## Patentansprüche

1. Integrierte elektronische Schaltung (1), die geschützt ist gegen Umkehr der Polarität einer Versorgungsbatterie (2) eines Typs, der einen ersten MOS-Typ-Leistungstransistor (T1) mit einer inhärenten bzw. eigenen Diode (D3) umfaßt, der in Reihe mit einer Last (RL) zwischen einem Pol (Vc) der Batterie (2) und Erde zu verbinden ist, um die elektrische Last zu treiben bzw. anzusteuern, dadurch gekennzeichnet, daß die Schaltung (1) einen zweiten N-Kanal-MOS-Typ-Schutztransistor (T2) mit einer inhärenten Diode (D4) umfaßt, wobei der zweite Transistor (S2) seine Source mit einem Eingangsstift (7) der Schaltung (1) zur Verbindung mit dem Pol (Vc) der Batterie (2) verbunden hat und seinen Drain (D2) mit dem ersten Transistor (T1) reihenverbunden hat, wobei die Transistoren (T1, T2) ihre ihhärenten Dioden (D3, D4) in entgegengesetzten Richtungen vorgespannt haben und der zweite Transistor (T2) von der Schaltung (1) gesteuert ist, um bei Polaritätsumkehr der Batterie in einem Pause- bzw. Unterbrechungszustand zu sein.

2. Schaltung nach Anspruch 1, bei der der erste und zweite Transistor (T1, T2) beide von dem N-Kanal-MOS-Typ sind und ihre jeweiligen Drain-Elektroden (D1, D2) miteinander verbunden sind.

## Revendications

1. Circuit électronique intégré (1) qui est protégé contre une inversion de la polarité d'une batterie (2) d'alimentation, d'un type comportant un premier transistor de puissance (T1) de type MOS avec une diode inhérente (D3) devant être connecté en série avec une charge (RL) entre un pôle (Vc) de ladite batterie (2) et la masse, pour attaquer ladite charge électrique, caractérisé en ce que ledit circuit (1) comporte un second transistor (T2) de protection de type MOS à canal (N) avec une diode inhérente (D4), ledit second transistor (T2) ayant sa source (S2) connectée à une broche d'entrée (7) du circuit (1) pour une connexion audit pôle (Vc) de la batterie (2) et son drain (D2) connecté en série audit premier transistor (T1), lesdits transistors (T1, T2) ayant leurs diodes inhérentes (D3, D4) polarisées dans des sens opposés et ledit second transistor (T2) étant commandé par le circuit (1) pour être dans un état ouvert lors d'une inversion de polarité de ladite batterie.

2. Circuit selon la revendication 1, dans lequel lesdits premier et second transistors (T1, T2) sont tous deux du type MOS à canal N, leurs électrodes de drains respectives (D1, D2) étant connectées entre elles.
